# EUROPÄISCHE PATENTANMELDUNG

(11) **EP 3 239 418 A1**
(43) Veröffentlichungstag der Anmeldung: **01.11.2017**
(21) Anmeldenummer: 17000499.8
(22) Anmeldetag: 27.03.2017
(51) Int. Cl.: E03C 1/126, E03C 1/22, E03C 1/262, F16B 9/02, F16B 2/22

(54) **TRÄGERFORM FÜR DUFT- UND REINIGUNGSMATERIAL AN ABFLUSS-STOPFEN**

(30) Priorität: 01.04.2016 AT 1682016
(71) Anmelder: Riegler, Manfred, 4715 Taufkirchen (AT)
(72) Erfinder: Riegler, Manfred, 4715 Taufkirchen (AT)
(74) Vertreter: Dupal, Helmut

(57) **Zusammenfassung**

Trägerform (3) aus Kunststoff zur Anbringung von Duft- und/oder Reinigungsmaterial (6) an Abflussstopfen (4), mit einer kreisförmigen Trägerplatte (7), eine Ausnehmung aufweisend an der eine U-förmige Trägerwand (10) ange-bracht ist, die auf der Innenseite von den Enden zur Mitte führende elastische Befestigungsklammern (8) aufweist und die Trägerform (3) mit wenigstens einer Halteeinrichtung zur Sicherung des anzubringenden Duft- und/oder Reinigungsmaterial (6) versehen ist.

## Beschreibung

Die Erfindung betrifft eine Trägerform aus Kunststoff zur Anbringung von Duft-und/oder Reinigungsmaterial an Abflussstopfen mit den Merkmalen des Oberbegriffes des Anspruches 1.

Häufig bilden sich durch Haare und sonstige Rückstände in Abflüssen von Haushalten und Betriebsstätten unhygienische und übelriechende Reste.

Beim derzeitigen Stand der Technik der Vorrichtungen, ist die Beschickung der Abflüsse mit Duft-und/oder Reinigungsmaterial nur mit erheblichen technischen und zeitlichen Aufwand möglich und häufige Reinigung ist sonst erforderlich.

Bei einer austauschbaren Trägerform nach dem, Oberbegriff des Anspruches 1 ist es wesentlich, die Haltbarkeit auf dieser zu erhöhen um dadurch die Wirkungsdauer zu vergrößern.

Aufgabe der Erfindung ist es demnach, eine ohne technischen Mehraufwand austauschbare Trägerform mit einfacher Anbringungsmöglichkeit zu schaffen, die mit einer Einrichtung zur haltbaren Aufnahme einer Zubereitung von Duft- und/oder Reinigungsmaterial versehen ist, damit der Abtrag dieses Materials gleichmäßig verlaufen kann.

Diese Aufgabe wird erfindungsgemäß mit den Merkmalen des kennzeichnenden Teiles des Anspruches 1 gelöst.

Die weiteren Ansprüche betreffen besonders vorteilhafte und erfinderische Ausgestaltungen der Erfindung, die Lösungen für unterschiedliche Anwendungsfälle und unterschiedliches Duft- und/oder Reinigungsmaterial umfassen.

Bei solchen Trägerformen, die eine einfache Nachbestückung, passend für alle im Handel verfügbaren Abfluss-stopfen gestattet, ist bei allen Abflussstopfen die mittels Hebelwirkung verschließbar sind oder sich mittels Druckverschluss öffnen oder schließen lassen, wie bei Waschbecken, Duschkabinen, Badewannen, verwendbar.

Die Trägerform ist eine flache runde Scheibe mit Ausschnitt in deren Mitte für eine Führung, die jeweils auf der Außenseite zur Mitte schauend elastische Klammern aufweist, die auf die uunterschiedlichen Durchmesser von Abflussstopfen, wahlweise ober- oder unterhalb des Haarfängers aufsteckbar sind und infolge der federnden Klammern ohne weiteres anzubringen sind.

Für Druckverschlussstopfen kann zwischen Klammern und Trägerwand eine Sollbruchstelle angebracht sein um diese heraus zu brechen.

Das Duft-und/oder Reinigungsmaterial kann direkt im Kaltpressverfahren auf die Trägerplatte aufgepresst werden oder in einem Behälter, wie ein Korb eingebracht sein.

Damit die Anbringung auf der Trägerplatte gesichert ist, wird diese mit wenigstens einer Halteeinrichtung versehen. Es wird die Trägerplatte mit mehreren Noppen in Abständen voneinander versehen, die nach oben die Trägerplatte überragen oder es werden Vertiefungen angebracht, die dasDuft- und/oder Reinigungsmaterial oder dessen Träger, der mit angepassten Aussparungen oder Erhöhungen gegengleich ausgestattet ist, festhalten.

Die Trägerplatte weist üblicherweise ca. 30mm Durchmesser und ca. 1mm Dicke auf und an deren mittigen Ausnehmung ist die U-förmige Trägerwand angeordnet, deren Höhe bei häufig verwendeten Abflüssen eine Höhe von ca. 15mm und 1mm Dicke besitzt. An dem äußeren Ende der Trägerwand sind beiderseits elastische Befestigungsklammern nach innen gerichtet angeordnet, die an den Verbindungsstellen mit einer Sollbruchstelle versehen sind, um die Trägerform bei Bedarf auch an Abflussstopfen mit dickeren Gewinderohren oder -Stangen anbringen zu können.

Um die Trägerform mit Duft- und/oder Reinigungsmaterial unterschiedlicher Beschaffenheit, vor Allem in bezug auf Deren Textur, befüllen zu können ist die Anwendung zusätzlicher oder anderer Halteeinrichtungen überaus wirksam.

So ist die Anbringung einer Randerhöhung am äußeren Umfang der Trägerplatte bereits sehr geeignet und kann zusätzlich mit Noppen oder Vertiefungen auf dieser kombiniert werden.

Eine noch weitergehende Haltewirkung mit erreicht, indem am äußeren Umfang der Trägerplatte eine äußere Wand angebracht ist, deren Höhe bis zur Höhe der Trägerwand reicht und mit einer Mehrzahl von Öffnungen für die ausreichende Lösung des Duft- und/oder Reinigungsmaterials versehen ist

Eine andere Gestaltung einer Halteeinrichtung besteht darin, einen Behälter zu schaffen, der an die Form der Trägerplatte und der Trägerwand der Trägerform angepasst ist und dadurch auf diese aufschiebbar ist, wodurch ein nochmals vereinfachter Ersatz von Duft- und/oder Reinigungsmaterial erreichbar ist.

Für die Lösung des im Behälter gespeicherten Duft- und/oder Reinigungsmaterials sind an der äußeren Seitenwand und fallweise am Boden einer Mehrzahl von Öffnungen angebracht sind.
Am Boden dieses aufschiebbaren Behälters können Vertiefungen oder Noppen, angepasst an jene der Trägerplatte angebracht sein, die bei aufgeschobenem Behälter miteinander verrasten.

Zur Verbesserung der Speicherung des Duft- und/oder Reinigungsmaterials kann die äußere Wand und die Trägerwand der Trägerplatte sowie die Seitenwände des Behälters jeweils mit einem Deckel verschlossen werden, der ebenfalls mit Öffnungen versehen ist, die den Eintritt von Spülwasser gestatten und der aufgeklemmt oder aufgeklebt oder auch aufgeschweißt ist.

Die Öffnungen in der Trägerplatte, der äußeren Wand der Trägerform und dem Boden und der äußeren Seitenwand des Behälters und deren Deckel können auch durch gitterförmig durchbrochene Flächen hergestellt sein und der Anteil der Öffnungen oder deren Öffnungsfläche wird nach der Beschaffenheit, fest oder mehr zähflüssig und dem Lösungverhalten des Duft- und/oder Reinigungsmaterials bemessen um auch längere Verwendungsdauer zu erhalten.

Die Anwendung von Wänden als Halteeinrichtungen für das eingefüllte Material dient gleichermaßen der besseren Handhabbarkeit mit Berührungsschutz vor dem Füllgut.

Ein auf die Trägerform auffschiebbarer Behälter ergibt eine weiter vereinfachende Anwendung der Erfindung, besonders auch wenn dessen Boden mit Noppen oder Vertiefungen auf der Trägerplatte der Trägerform einrasten.

Die Erfindung wird anhand einiger Ausführungsbeispiele gemäß den Zeichnungen näher erläutert:

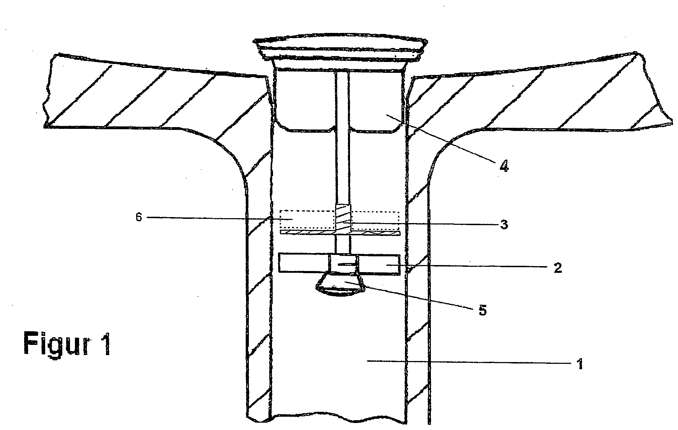

Figur 1 zeigt einen Abflussstopfen 4 mit angebrachter Trägerform 3 mit aufgebrachtem Duft- und/oder Reinigungsmaterial 6 in einem Abfluss 1 mit Haarfänger 2 und einer Haarfängerschraube 5 an der Gewindestange.

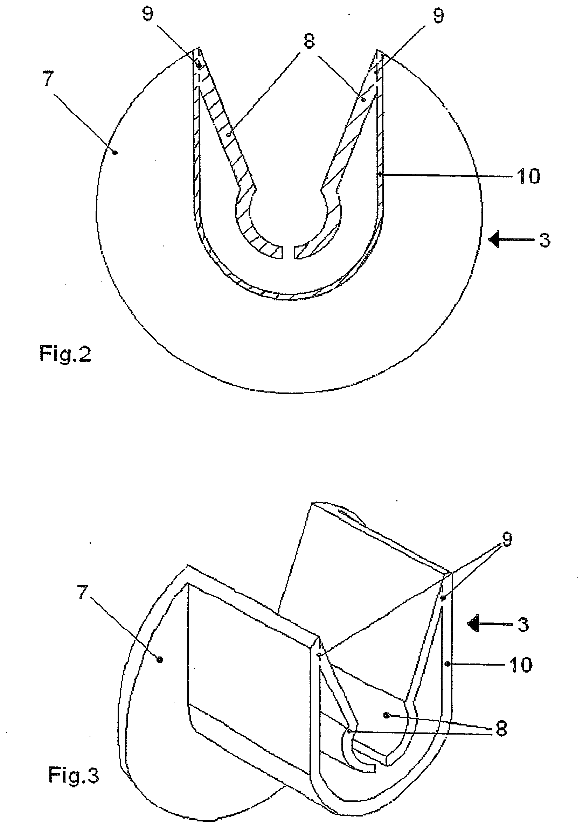

Fig. 2 zeigt die Trägerform 3 in Draufsicht mit der Trägerplatte 7 mit einer U-förmigen Ausnehmung an der die Trägerwand 10 angeordnet ist und an der federnde Befestigungsklammern 8 nach innen zu gerichtet angebracht sind, die dort jeweils eine Sollbruchstelle 9 aufweisen.
Figur 3 zeigt die Trägerform 3 schräg von oben mit den Befestigungsklammern 8 an der Trägerwand 10 auf der Trägerplatte 7 und die Sollbruchstellen 9.

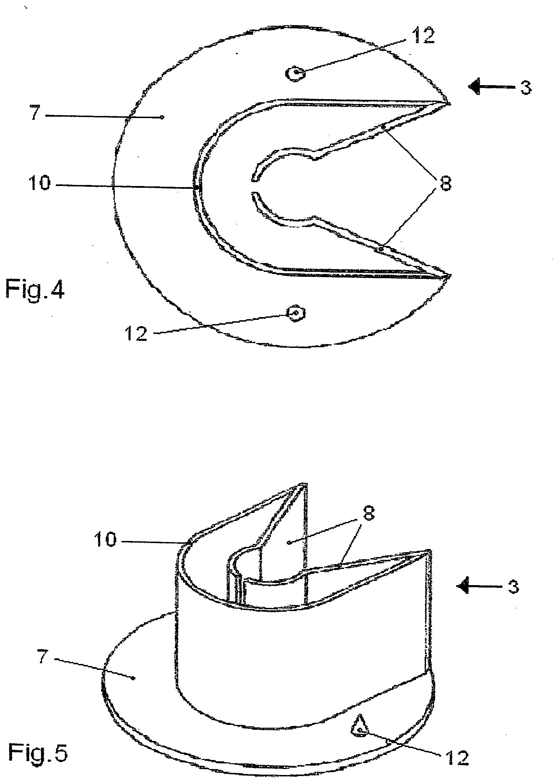

Figur 4 zeigt die Trägerform 3 von oben mit den Befestigungsklammern 8 und die Trägerplatte 7 mit vorstehenden Noppen 12 als Halteeinrichtung für aufzubringendes Duft- und/Reinigungsmaterial.
Figur 5 zeigt die Trägerform 3 schräg von oben mit den Noppen 12 auf der Trägerplatte 7.

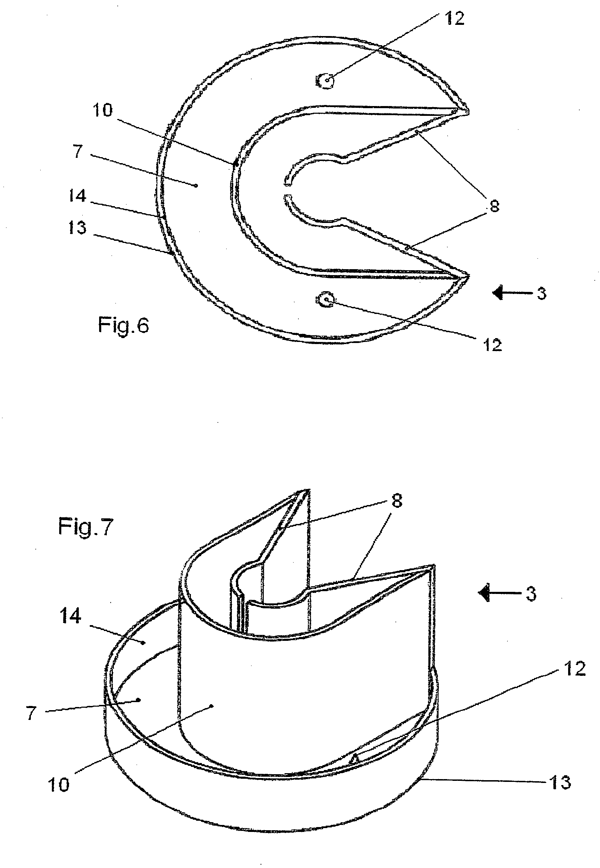

Figur 6 zeigt die Trägerform 3 von oben mit den Befestigungsklammern 8 und die Trägerplatte 7 mit den vorstehenden Noppen 12 und mit einer Randerhöhung 14 am äußeren Umfang 13 der Trägerplatte 7, beide als Halteeinrichtungen für aufzubringendes Duft- und/Reinigungsmaterial.
Figur 7 zeigt die Trägerform 3 schräg von oben mit den Befestigungs-klammern 8 und die Trägerplatte 7 mit einer vorstehenden Noppe 12 und mit der Randerhöhung 14 am äußeren Umfang 13 der Trägerplatte 7.

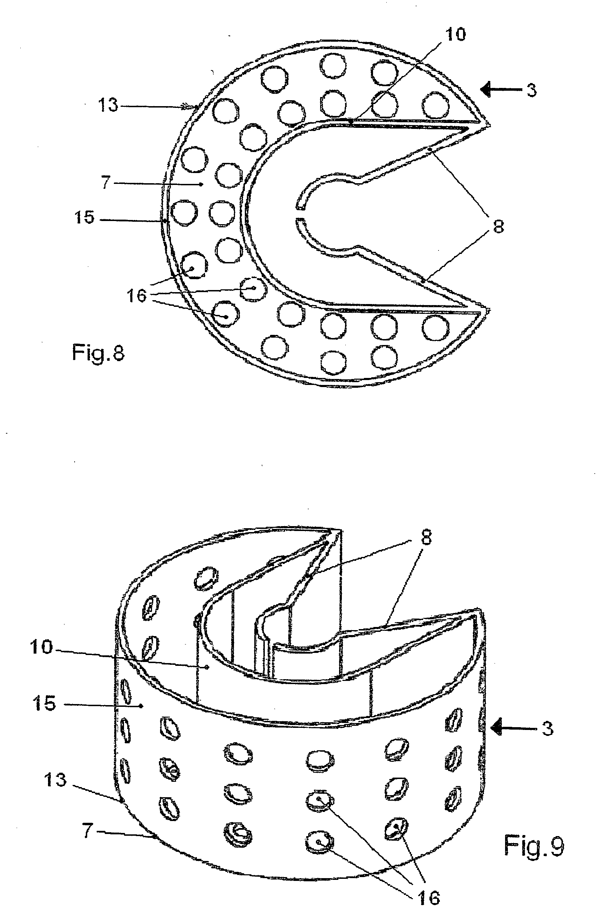

Figur 8 zeigt die Trägerform 3 von oben mit den Befestigungsklammern 8 und die Trägerplatte 7 mit einer Vielzahl von Öffnungen 16 und eine äußere Wand 15 als Halteeinrichtung, die am äußeren Umfang 13 der Trägerplatte 7 angebracht ist und deren Höhe bis zur Höhe der Trägerwand 10 reicht.
Figur 9 zeigt die Trägerform 3 schräg von oben mit den Befestigungsklammern 8 und die am äußeren Umfang 13 der Trägerplatte 7 angebrachte äußere Wand 15 als Halteeinrichtung, deren Höhe bis zur Höhe der Trägerwand 10 reicht und die mit Öffnungen 16 für den Durchtritt von gelöstem Duft- und/oder Reinigungsmaterial versehen ist.

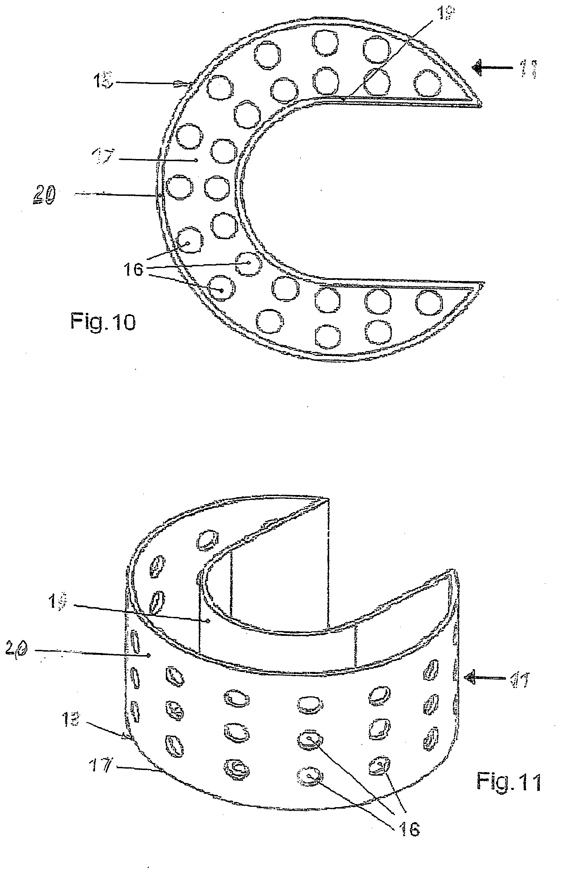

Figur 10 zeigt einen Behälter 11, der auf die Trägerplatte 7 der Trägerform 3 aufschiebbar ist (nicht dargestellt), bei dem der Boden 17 und eine innere Seitenwand 19 an die Ausnehmung der Trägerplatte 7 angepasst angeordnet ist und am äußeren Umfang 13 des Bodens 17 eine äußere Seitenwand 20 angebracht ist. Der Boden 17 ist sichtbar mit einer Vielzahl von Öffnungen 16 für das sich lösende Duft- und/oder Reinigungsmaterial versehen.
Figur 11 zeigt den Behälter 11 schräg von oben, mit der u-förmig geformten inneren Seitenwand 19 und mit der mit einer Vielzahl von Öffnungen 16 versehenen äußeren Seitenwand 20am äußeren Umfang 13 des Bodens 17.

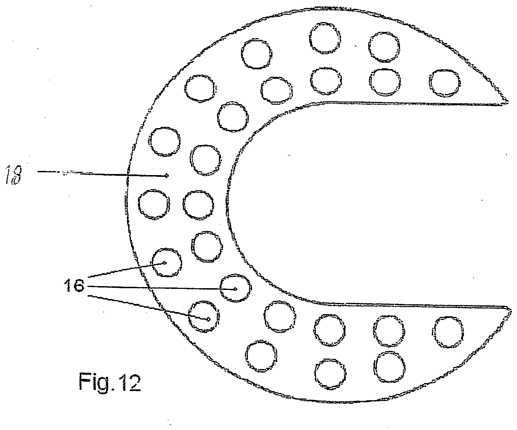

Figur 12 zeigt die Draufsicht auf einen Deckel 18 zum Verschluss von Trägerform 3 und/oder Behälter 11, der an die Form der Trägerwand 10 und der äußeren Wand 15 der Trägerform 3 und/oder an die Form der inneren Seitenwand 19 und der äußeren Seitenwand 20 des Behälters 11 angepasst ist und an dem eine Vielzahl von Öffnungen 16 für den Eintritt von Spülwasser angebracht sind.

### Bezugszeichenliste

- 1: Abfluss
- 2: Haarfänger
- 3: Trägerform
- 4: Abflusssstopfen
- 5: Haarfängerschraube
- 6: Duft- und/oder Reinigungsmaterial
- 7: Trägerplatte
- 8: Befestigungsklammer
- 9: Sollbruchstelle der Befestigungsklammer 8
- 10: Trägerwand
- 11: Deckel für die Trägerform 3 und/oder für den Behälter 11
- 12: Noppen auf der Trägerplatte 7
- 13: äußerer Umfang der Trägerplatte und des Bodens des Behälters 11
- 14: Randerhöhung am äußeren Umfang der Trägerplatte 7
- 15: äußere Wand an der Trägerplatte 7
- 16: Öffnung in der äußeren Wand 15, der Trägerplatte 7, dem Boden 17 des Behälters 11, dessen äußerer Seitenwand 20, dem Deckel 18 der Trägerform 3 und des Behälters 11
- 17: Boden des Behälters 11
- 18: Deckel der Trägerform 3 und/oder des Behälters 11
- 19: innere Seitenwand des Behälters 11
- 20: äußere Seitenwand des Behälters 11

## Patentansprüche

1. Trägerform (3) aus Kunststoff zur Anbringung von Duft- und/oder Reinigungsmaterial (6) an Abflussstopfen (4), mit einer kreisförmigen Trägerplatte (7), eine Ausnehmung aufweisend an der eine U-förmige Trägerwand (10) angebracht ist, die auf der Innenseite von den Enden zur Mitte führende elastische Befestigungsklammern (8) aufweist, **dadurch gekennzeichnet, dass** die Trägerform (3) mit wenigstens einer Halteeinrichtung zur Sicherung des anzubringenden Duft- und/oder Reinigungsmaterial (6) versehen ist.

2. Trägerform (3) nach Anspruch 1 **dadurch gekennzeichnet, dass** die Trägerplatte (7) ca. 30mm Durchmesser und ca. 1mm Dicke besitzt auf der die U-förmige Trägerwand (10), mit einer Höhe von ca. 15mm und 1mm Dicke angebracht ist.

3. Trägerform (3) nach Anspruch 1 oder 2, **dadurch gekennzeichnet, dass** die elastischen Befestigungsklammern (8) an den Verbindungsstellen zur Trägerwand (10) mit einer Sollbruchstelle (9) ausgestattet sind.

4. Trägerform (3) nach Anspruch 1 **dadurch gekennzeichnet, dass** das Duft- und/oder Reinigungsmaterial (6) im Kaltpressverfahren an die Trägerplatte (7) Trägerform (3) gepresst ist.

5. Trägerform (3) nach Anspruch 1 oder 2, **dadurch gekennzeichnet, dass** die Trägerplatte (7) mit mehreren Noppen (12) oder Eintiefungen als Halteeinrichtung für das Duft- und/oder Reinigungsmaterial (6) versehen ist.

6. Trägerform (3) nach .einem der Ansprüche 1, 2 oder 5, **dadurch gekennzeichnet, dass** die Trägerplatte (7) am äußeren Umfang (13) mit einer Randerhöhung (14) als Halteeinrichtung versehen ist.

7. Trägerform (3) nach einem der Ansprüche 1, 2 oder 5, **dadurch gekennzeichnet, dass** an der Trägerplatte (7) am äußeren Umfang (13) eine äußere Wand (15) als Halteeinrichtung angebracht ist, deren Höhe ganz oder wenigstens teilweise bis zur Höhe der Trägerwand (10) reicht und so wie die Trägerplatte (7) mit einer Mehrzahl von Öffnungen (16) versehen ist.

8. Trägerform (3) nach Anspruch 1 oder 2, **dadurch gekennzeichnet, dass** auf deren TrägerPlatte (7) ein Behälter (11) als Halteeinrichtung aufschiebbar ist, mit einem Boden (17) der an die Form der Trägerwand (10) der Trägerplatte (7) angepasst ist und an bei dem die Höhe einer inneren Seitenwand (19) und einer äußeren Seitenwand (20) dieser bis etwa entspricht und der Boden (17) und die Seitenwand (20), die am äußeren umfang (13) desselben angebracht ist, mit einer Mehrzahl von Öffnungen (16) versehen sind.

9. Trägerform (3) nach Anspruch 1, 2, 7 oder 8, **dadurch gekennzeichnet, dass** die äußere Wand (15) und die Trägerwand (10) der Trägerplatte (7) der Trägerform (3) und die Seitenwände (19 und 20) des Behälters (11) jeweils mit einem Deckel (18) verschließbar sind, der aufklemmbar, aufklebbar oder aufschweißbar ist und mit einer Mehrzahl von Öffnungen (16) versehen ist.

10. Trägerform (3) nach Anspruch 1 oder 2, **dadurch gekennzeichnet, dass** der aufschiebbare Behälter (11) im Boden (17) mit Vertiefungen oder Noppen versehen ist, die mit Noppen (12) oder Vertiefungen der Trägerplatte (7) der Trägerform (3) verrasten
